# FASCICULE DE BREVET EUROPEEN

(11) **EP 2 277 090 B1**
(45) Date de publication et mention de la délivrance du brevet: **07.11.2012**
(21) Numéro de dépôt: 09738322.8
(22) Date de dépôt: 03.04.2009
(51) Int. Cl.: G05D 23/19

(54) **PROCEDE D'EQUILIBRAGE DE PUISSANCE D'UN DISPOSITIF DE CHAUFFAGE**
VERFAHREN ZUR SYMMETRIERUNG DER LEISTUNG EINES HEIZGERÄTES
METHOD FOR BALANCING THE POWER OF A HEATING DEVICE

(30) Priorité: 11.04.2008 FR 0852449
(43) Date de publication de la demande: 26.01.2011
(73) Titulaire: Société Muller & Cie, 75018 Paris (FR)
(72) Inventeur: MORARD, Jean-Louis, F-75018 Paris (FR); POURRAT. François, F-75018 Paris (FR)
(74) Mandataire: Lotaut, Yacine Diaw
(86) Numéro de dépôt international: PCT/FR2009/000399
(87) Numéro de publication internationale: WO 2009/133288

(56) Documents cités:
- DE-A1- 3 525 315
- FR-A- 2 465 388
- FR-A- 2 466 717

## Description

La présente invention se rapporte à un procédé d'équilibrage de puissance d'un dispositif de chauffage.

Un dispositif de chauffage est généralement utilisé pour chauffer un local, par exemple une pièce d'une maison. Plus particulièrement, un dispositif de chauffage est prévu pour maintenir une température sensiblement constante dans le local. Pour cela, le dispositif de chauffage comporte généralement un émetteur de chaleur, un thermostat et une sonde.

L'émetteur de chaleur est un appareil de chauffage pouvant être de tout type connu de l'homme de l'art, par exemple un radiateur électrique ou un convecteur. L'émetteur de chaleur fonctionne suivant un certain régime appelé taux de marche. Le taux de marche est défini en pourcentage d'une puissance maximale de l'émetteur de chaleur. Ce taux de marche ne peut donc être supérieur à 100%.

Le taux de marche utilisé par un dispositif de chauffage pour maintenir une température ambiante sensiblement stable est calculé par le thermostat. Pour cela, le thermostat utilise une température de référence, typiquement la température ambiante de la pièce. Cette température de référence est relevée par la sonde. La sonde peut être une sonde d'ambiance, une sonde extérieure ou tout autre type de sonde permettant de fournir une température de référence au thermostat.

Le taux de marche est défini en fonction d'une température de consigne. La température de consigne représente la température ambiante souhaitée par l'utilisateur. Ainsi, si la température ambiante est de 18°C et que la température de consigne est définie à 20°C, le thermostat définit un taux de marche capable de faire remonter la température ambiante à 20°C.

Les caractéristiques des dispositifs de chauffages sont généralement choisies en fonction du local devant être équipé. Si un dispositif ayant une forte capacité de chauffage est installé dans un local pour lequel suffirait un dispositif de faible capacité de chauffage, le dispositif de chauffage chauffe le local correctement avec un taux de marche relativement faible. Cependant, si un dispositif ayant une faible capacité de chauffage est installé dans un local nécessitant un dispositif ayant une forte capacité de chauffage, le dispositif de chauffage installé fonctionne en continu à plein régime, sans même parfois réussir à chauffer correctement le local.

De même, dans le cas d'un dispositif de chauffage comportant plusieurs émetteurs de chaleur, si l'un des émetteurs est défectueux, le ou les autres émetteurs doivent compenser le manque de chaleur normalement émise par l'émetteur défectueux. Les émetteurs de chaleur opérationnels voient alors leur taux de marche augmenter. Même en fonctionnant à plein régime, ces émetteurs peuvent ne pas suffire à maintenir la température ambiante souhaitée. Les émetteurs de chaleur fonctionnent alors à plein régime de manière continue.

Des éléments extérieurs peuvent également imposer un fonctionnement à plein régime du dispositif de chauffage, par exemple une arrivée d'air froid liée à une fenêtre ou une porte ouverte. Dans une telle situation, le dispositif de chauffage peut ne pas suffire à maintenir la température ambiante à la température de consigne. Le dispositif de chauffage fonctionne alors à un taux de marche maximal de manière continue, sans parvenir à maintenir la température ambiante aux alentours de la température de consigne.

Un fonctionnement à un taux de marche maximal et de manière continue, lors de telles situations, peut endommager le dispositif de chauffage.

Plusieurs solutions sont connues de l'homme du métier afin d'éviter ce problème. Ainsi il existe des dispositifs de chauffage d'appoint. De tels dispositifs présentent notamment des contraintes liées à leur apport énergétique ; par exemple un convecteur électrique nécessite la présence d'une prise électrique. De plus, ces dispositifs ne sont pas toujours adaptés, par exemple à un local de taille importante.

Une autre solution peut consister à limiter le taux de marche maximal d'un dispositif de chauffage. On peut par exemple limiter le taux de marche en utilisation d'un dispositif de chauffage à 80%. Cependant une telle limitation arbitraire, si elle évite une utilisation intensive et néfaste du dispositif de chauffage, ne permet pas une utilisation optimale dudit dispositif. Une telle solution revient en fait à produire des dispositifs de chauffage moins puissants, mais ayant une marge de sécurité d'utilisation.

Ces solutions ne sont donc pas envisageables pour résoudre le problème d'une utilisation intensive d'un dispositif de chauffage sans usure prononcée dudit dispositif.

Pour résoudre ce problème, l'invention prévoit de modifier la température de consigne, de manière à éviter une utilisation intensive prolongée du dispositif de chauffage dans des situations critiques. Le procédé de chauffage selon l'invention comporte une étape d'alimentation en énergie, une étape de mesure de la température ambiante à l'aide d'une sonde, une étape de définition de la température de consigne à l'aide d'un thermostat et une étape de chauffage en tenant compte des étapes précédentes.

Le procédé selon l'invention prévoit en outre une étape d'observation, aussi appelée phase d'observation. Cette phase d'observation a pour but d'évaluer le taux de marche du dispositif de chauffage afin de vérifier que le dispositif de chauffage ne fonctionne pas en sur-régime.

**Le document** FR2466717**, connu de l'état de la technique, divulgue un procédé de chauffage comportant une phase d'observation, au cours desquels un taux de marche de l'émetteur de chaleur est observé, ainsi qu'une étape au cours de laquelle la température de consigne est modifiée en fonction du taux de marche observé. Cependant, dans ce procédé, un seul taux de marche est observé au cours de chaque phase d'observation.**

**Au contraire, selon l'invention,** l'étape d'observation **se décompose** en n cycles, n étant un nombre entier au moins égal à 2. La décomposition de l'observation sur n cycles permet de s'assurer qu'un cycle présentant un taux de marche trop élevé n'est pas un cycle isolé, mais montre réellement une insuffisance du dispositif de chauffage par rapport aux besoins en chaleur du local.

Le procédé selon l'invention prévoit une étape durant laquelle la température de consigne est modifiée en fonction du taux de marche du dispositif de chauffage. Typiquement, si l'observation durant plusieurs cycles consécutifs montre que le taux de marche est trop élevé de manière continue, la température de consigne est diminuée de manière à éviter une utilisation intensive du dispositif de chauffage.

Inversement, il est possible que le taux de marche observé durant la phase d'observation ne soit pas trop élevé. Dans ce cas, il est possible que la température de consigne en cours soit une température de consigne différente de la température de consigne définie initialement par un utilisateur, appelée température de consigne initiale. Par exemple, la température de consigne en cours est inférieure à la température de consigne initiale, si elle a été diminuée pour éviter le sur-régime du dispositif de chauffage.

Le procédé selon l'invention augmente alors la température de consigne en cours afin de se rapprocher de la température de consigne initiale. Cependant, la température de consigne en cours ne doit pas dépasser la température de consigne initiale.

L'invention a donc pour objet un procédé de chauffage à l'aide d'un dispositif de chauffage comportant au moins un émetteur de chaleur, un thermostat et une sonde, le procédé comportant :
- une étape au cours de laquelle on alimente en énergie le dispositif de chauffage,
- une étape au cours de laquelle une température ambiante est mesurée par la sonde,
- une étape au cours de laquelle une température de consigne est définie,
- une étape de transmission, à l'émetteur de chaleur, d'instructions de chauffage tenant compte de ces températures,
   ledit procédé étant caractérisé en ce qu'il comporte :
- une phase d'observation, comportant au moins deux cycles au cours desquels un taux de marche de l'émetteur de chaleur est mémorisé dans une mémoire de données,
- une étape au cours de laquelle la température de consigne peut être modifiée en fonction des taux de marche mémorisés pendant la phase d'observation.

**A** la suite d'une phase d'observation, la température de consigne est diminuée si le taux de marche observé est supérieur ou égal à une valeur critique durant un nombre minimal de cycles de ladite phase d'observation.

**De plus,** à la suite d'une phase d'observation, la température de consigne est augmentée si le taux de marche observé durant tous les cycles de ladite phase d'observation est inférieur à une valeur critique, si la température de consigne est inférieure à la température de consigne initiale et si la température ambiante a augmenté durant ladite phase d'observation.

Selon une forme préférentielle de l'invention, la température de consigne modifiée ne peut dépasser une température de consigne initiale définie par un utilisateur du dispositif de chauffage.

L'invention a également pour objet un dispositif muni de moyens de mise en oeuvre d'un tel procédé.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : Une vue schématique d'un local comportant un dispositif de chauffage selon l'invention.
- Figure 2: Un graphique de température ambiante et de température de consigne durant une utilisation du procédé selon l'invention dans un dispositif de chauffage.

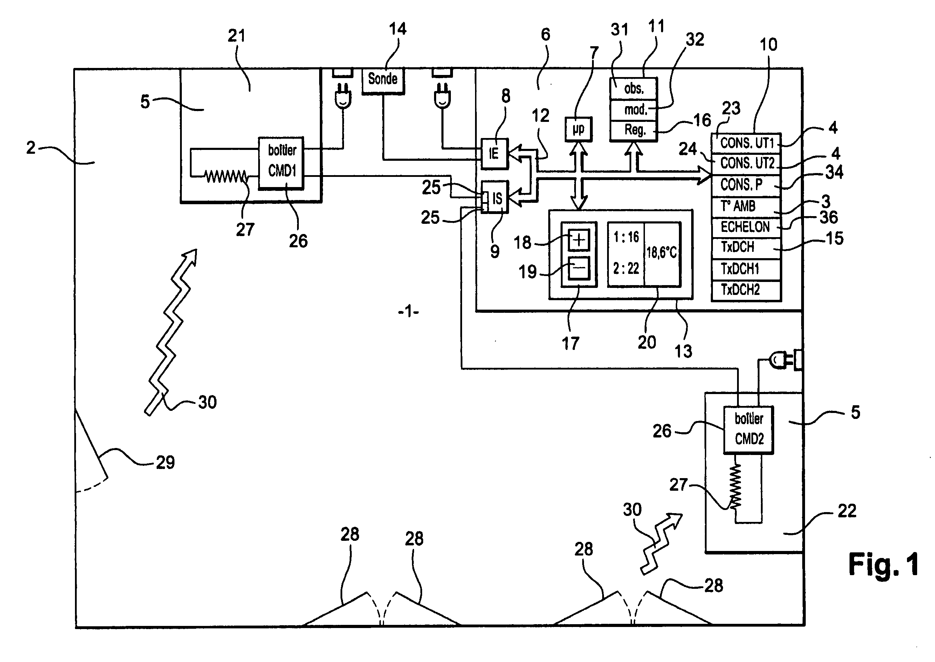

La figure 1 représente une vue schématique d'un local comportant un dispositif de chauffage selon l'invention.

Un dispositif de chauffage 1 est généralement installé dans un local 2. Un tel dispositif de chauffage 1 a pour fonction de maintenir une température 3 du local 2, dite température ambiante 3, à une certaine température 4 dite température de consigne 4. Pour cela, le dispositif de chauffage comporte un ou plusieurs émetteurs de chaleur 5. Pour définir la température de consigne 4, le dispositif 1 selon l'invention comporte un thermostat 6. Un thermostat 6 peut définir la température de consigne 4 pour un ou plusieurs émetteurs de chaleur 5.

Dans l'exemple présenté à la figure 1, le thermostat 6 comporte un dispositif de régulation du dispositif de chauffage. Ce dispositif de régulation comprend un microprocesseur 7, une interface d'entrée 8, une interface de sortie 9, une mémoire de données 10, une mémoire de programme 11, un bus de communication 12, un boîtier de commande 13. L'interface d'entrée 8 a pour fonction de recevoir les données et l'énergie utiles pour le thermostat. Typiquement, l'interface d'entrée reçoit la température ambiante 3 relevée par une sonde 14. Le bus de communication 12 met en relation tous les éléments présents dans le thermostat 6. Ainsi la température ambiante 3 peut être stockée dans la mémoire de données 10. Cette température ambiante 3 est utilisée par le microprocesseur 7, ainsi que d'autres données contenues dans la mémoire de données 10, pour calculer un taux de marche 15 à appliquer pour le ou les émetteurs de chaleur 5. Le calcul du taux de marche 15 se fait à l'aide d'un programme de régulation 16. Le programme de régulation 16 est stocké dans la mémoire de programme 11.

La température de consigne 4 est définie par un utilisateur du thermostat 6 à l'aide du boîtier de commande 13. Typiquement, le boîtier de commande comporte un dispositif de réglage 17. Le dispositif de réglage 17 comporte un bouton « plus » 18 et un bouton « moins » 19. Ces boutons 18 et 19 permettent à un utilisateur du thermostat 6 de définir la température de consigne 4. Par ailleurs, le boîtier de commande 13 peut comporter un dispositif d'affichage 20, par exemple un écran LCD rétro-éclairé 20. Il est envisageable de remplacer les boutons de réglage 18 et 19 ainsi que l'écran LCD 20 par une molette mécanique graduée.

Dans le cas d'un thermostat 6 contrôlant simultanément un premier émetteur de chaleur 21 et un deuxième émetteur de chaleur 22, il peut être possible pour un utilisateur dudit thermostat 6 de définir une première température de consigne 23 pour le premier émetteur de chaleur 21 et une deuxième température de consigne 24 pour le deuxième émetteur de chaleur 22. Les deux températures de consigne 23 et 24 définies peuvent alors être différentes. Ces deux températures de consigne 23 et 24 peuvent être affichées simultanément sur l'écran LCD 20.

Les taux de marche 15 calculés par le microprocesseur sont incorporés à des instructions 25 de chauffage. Les instructions 25 de chauffage circulent via le bus depuis le microprocesseur 7 jusqu'à l'interface de sortie 9. L'interface de sortie 9 envoie alors lesdites instructions 25 de chauffage à appliquer aux émetteurs de chaleur 21 et 22.

Chaque émetteur 5 de chaleur comporte un boîtier de gestion 26. Un tel boîtier de gestion 26 réceptionne d'une part l'énergie nécessaire au fonctionnement de l'émetteur 5 de chaleur et, d'autre part, les instructions 25 de chauffage à appliquer. Le taux de marche 15 correspondant à ces instructions 25 de chauffage est alors appliqué, par exemple à une résistance 27. C'est cette résistance 27 qui chauffe le local 2 en fonction dudit taux de marche 15.

Le boîtier 26 envoie en retour, au dispositif de régulation, la valeur du taux de marche 15 en cours de l'émetteur 5 de chaleur.

Dans un local 2 comportant une fenêtre 28 et/ou une porte 29 donnant sur un espace ayant une température ambiante inférieure, une arrivée d'air froid 30 peut avoir lieu si la fenêtre 28 et/ou la porte 29 viennent à s'ouvrir. L'arrivée d'air froid 30 fait brusquement chuter la température ambiante 3. Cette chute de la température ambiante 3 doit être compensée par le dispositif de chauffage 1.

De même, dans le cas où le dispositif de chauffage 1 comporte deux émetteurs de chaleur 21 et 22, si un des deux émetteurs de chaleur est mal

réglé, il se peut que l'émetteur de chaleur 21 ou 22 restant soit le seul émetteur de chaleur 21 ou 22 opérationnel pour tenter de maintenir la température ambiante 3 à la température de consigne 4. Cette situation arrive aussi lorsque l'un des émetteurs de chaleur 21 ou 22 tombe en panne.

Dans de telles situations, le taux de marche 15 de l'appareil opérationnel peut être tel que l'émetteur 5 de chaleur doit fonctionner au maximum de ses capacités, ou proche de ce maximum, de manière continue. Une utilisation prolongée à un taux de marche 15 maximum ou proche dudit taux de marche 15 maximum est néfaste pour ledit émetteur 5 de chaleur et peut provoquer une dégradation plus rapide, voire un dysfonctionnement dudit émetteur 5 de chaleur. Il est donc important d'éviter un fonctionnement à un régime critique trop prolongé de l'émetteur 5 de chaleur.

Le procédé selon l'invention comporte une étape cyclique au cours de laquelle la température de consigne 4 est relevée. Le procédé selon l'invention comporte une étape cyclique au cours de laquelle la température ambiante 3 est mesurée. Le taux de marche 15 à appliquer à l'émetteur 5 est alors calculé par le microprocesseur 7 en fonction de ces températures.

Le procédé selon l'invention comporte en outre une étape d'observation 31 des taux de marche 15, appelée phase d'observation 31. La phase d'observation 31 peut être décomposée en cycles 32. Un cycle peut par exemple avoir une durée de l'ordre de la demi-minute ou de la minute. Une phase d'observation 31 peut compter jusqu'à un nombre n de cycles 32, n étant un nombre entier au moins égal à 2. Le nombre n maximal de cycles 32 d'une phase d'observation 31 est stocké dans la mémoire de données 10. Ce nombre n peut être défini à l'aide du boîtier de commande 13 du thermostat 6. On peut par exemple utiliser un nombre n compris entre 8 et 10.

Durant chaque cycle 32 de la phase d'observation 31, la valeur du taux de marche 15 en cours de l'émetteur 5 de chaleur est transmise par le boîtier 26 à l'interface 9, puis ladite valeur est mémorisée dans la mémoire de données 10.

La phase d'observation 31 sert à vérifier que le taux de marche 15 d'un émetteur 5 de chaleur n'est pas critique. Un taux de marche 15 critique est un taux de marche 15 supérieur ou égal à une valeur critique 33. La valeur critique 33 représente un taux de marche au-dessus duquel un fonctionnement en continu de l'émetteur 5 de chaleur risque d'abîmer ledit émetteur. La valeur critique peut par exemple être définie à 85% de taux de marche, et mémorisée ainsi dans la mémoire de données 10.

La division en n cycles 32 de la phase d'observation permet de s'assurer qu'un taux de marche 15 critique observé durant un cycle 32 isolé ne correspond pas à une erreur d'observation ou de définition du taux de marche 15. On cherche à vérifier que ce taux de marche 15 critique est observé lors de plusieurs cycles 32 consécutifs, ce qui indique que ce taux 15 est défini par les instructions 25 de chauffage.

Chaque phase d'observation 31 est suivie par une étape au cours de laquelle la température de consigne 4 peut être modifiée. Cette modification se fait en fonction du taux de marche 15 observé durant les n cycles 32 de la phase d'observation 31, et comparé à la valeur critique 33. La température de consigne 4 modifiée obtenue est alors utilisée pour calculer le taux de marche 15 jusqu'à la prochaine modification de la température de consigne 4.

Si durant la phase d'observation 31, un taux de marche 15 critique est observé pendant un nombre y minimal de cycles, la température de consigne est modifiée, plus précisément diminuée. Le nombre y est un nombre entier supérieur ou égal à 1, et inférieur ou égal au nombre n de cycles 32. Ce nombre y est stocké dans la mémoire de données 10 et peut éventuellement être défini à l'aide du boîtier de commande 13 du thermostat 6.

Cette diminution de la température de consigne 4 engendre le calcul d'un nouveau taux de marche 15, qui est appliqué durant la phase d'observation 31 suivante. Si durant la phase d'observation 31 suivante, des taux de marche 15 critiques sont encore observés et mémorisés dans la mémoire 10, la température de consigne 4 est à nouveau diminuée. Ces étapes sont répétées jusqu'à ce que les taux de marche 15 observés ne soient plus des taux de marche 15 critiques et que la température ambiante 3 soit le plus proche possible de la température de consigne 4 définie par l'utilisateur. Le procédé selon l'invention évite ainsi une dégradation des émetteurs de chaleur 5 en modifiant la température de consigne 4 de telle sorte qu'une température de consigne 34 appliquée pour définir le taux de marche 15 soit telle que ledit taux de marche 15 ne soit pas critique.

La température de consigne 34 appliquée peut donc être différente d'une température de consigne 35 définie par l'utilisateur, appelée température de consigne 35 initiale. Il est préférable de faire revenir la température de consigne 34 appliquée aussi proche que possible de la température de consigne 35 initiale, dès lors que l'événement ayant provoqué le changement de la température ambiante 3 est terminé. La fin d'un tel événement est par exemple le moment où la fenêtre 28 ou la porte 29 est refermée.

La température de consigne 35 initiale est stockée en mémoire de données 10. Elle constitue une limite maximale de la température de consigne 4. Par conséquent, si la température de consigne 34 appliquée est différente de la température de consigne 35 initiale, cette température de consigne 34 appliquée est forcément inférieure à la température de consigne initiale 35.

Par exemple, si un dispositif de chauffage 1 est installé dans un local 2 avec une fenêtre 28 et que la fenêtre 28 est ouverte, apportant son lot d'air froid, le thermostat 6 du dispositif de chauffage 1 peut avoir à définir un taux de marche 15 de 100%. Dans une telle situation, la phase d'observation 31 fait apparaître que le taux de marche 15 est de 100%. Le procédé selon l'invention stocke alors en mémoire de données 10 la température de consigne initiale 35 et applique une température de consigne 34 modifiée pour définir le taux de marche 15 pour la phase d'observation 31 suivante. Le procédé selon l'invention prévoit de diminuer la température de consigne 34 appliquée aussi longtemps que le taux de marche 15 observé reste critique, c'est-à-dire supérieur ou égal à la valeur critique 33.

Si la fenêtre 28 est refermée, il n'y a plus d'arrivée d'air froid. L'équilibre entre l'air froid entrant et l'émission de chaleur de l'émetteur 5 de chaleur est perturbé, c'est à dire que l'émission de chaleur ne compense plus une arrivée d'air froid. L'émission de chaleur de l'émetteur 5 fait alors monter la température ambiante 3 dans le local 2. Un mode de réalisation de l'invention prévoit que si la température de consigne 34 appliquée pour définir le taux de marche 15 est inférieure à la température de consigne 35 initiale et que le taux de marche 15 observé n'est pas critique, la modification de la température de consigne 34 appliquée consiste en une augmentation de ladite température. De telles augmentations de la température de consigne 34 appliquée peuvent avoir lieu jusqu'à atteindre la température de consigne 35 initiale, ou à observer à nouveau un taux de marche 15 critique lors d'une phase 31 d'observation.

Pour éviter à la température ambiante 3 de dépasser la température de consigne 35 initiale, il est nécessaire de réagir rapidement en cas d'augmentation de ladite température ambiante 3, par exemple à cause de la fermeture d'une fenêtre 28. Un mode préférentiel de réalisation de l'invention prévoit que si durant une phase d'observation 31, la température ambiante 3 augmente durant z cycles 32 consécutifs, la phase d'observation 31 en cours est arrêtée. Le nombre z est un nombre entier supérieur ou égal à 1, et inférieur ou égal au nombre n de cycles 32. Préférentiellement, on utilise un nombre z égal à 5.

Suite à l'arrêt de la phase d'observation 31 en cours, une modification de la température de consigne 34 appliquée est effectuée. Plus précisément, cette modification est une augmentation de la température de consigne 34 appliquée. Une nouvelle phase d'observation 31 débute alors avec un taux de marche 15 calculé par rapport à cette nouvelle température de consigne 34 appliquée.

Pour une question de souplesse, un mode préférentiel de réalisation de l'invention prévoit un écart-type 36 de comparaison de température, appelé échelon 36. La valeur d'un tel échelon est définie dans la mémoire 10. Cette valeur peut être de l'ordre du degré Celsius.

Ainsi si la température ambiante 3 est inférieure d'au moins deux échelons 36 à la température de consigne 34 appliquée, ladite température de consigne 34 est diminuée d'un échelon 36.

De même, si la température ambiante 3 est inférieure de moins de deux échelons 36 à la température de consigne 34 appliquée, ladite température de consigne 34 est rendue égale à la température ambiante 3 augmentée d'un échelon 36.

Afin de ne pas rester trop longtemps en fonctionnement avec un taux de marche 15 critique, une forme de réalisation de l'invention prévoit de faire passer le dispositif de chauffage 1 dans un mode de fonctionnement hors gel dans une certaine situation. Un mode de fonctionnement hors gel correspond au maintien d'une température de consigne 4 minimale, par exemple 5 °C, qui empêche la formation de gel dans le local. La valeur de cette température minimale est mémorisée dans la mémoire 10.

Selon ladite forme de réalisation de l'invention, le passage en mode hors gel a lieu si le taux de marche 15 observé est supérieur ou égal à la valeur critique 33 durant un nombre m de phase d'observation 31 consécutives, et si le taux de marche sur la phase d'observation en cours est égal à 100%.

Le nombre m est un nombre entier supérieur ou égal à 2, stocké dans la mémoire de données 10. Préférentiellement, on utilise un nombre m égal à 3.

Une telle situation correspond à un écart important entre la température de consigne 34 appliquée et la température ambiante 3. Dans une telle situation, on considère que le dispositif de chauffage n'est pas capable de fournir suffisamment de chaleur pour atteindre la température de consigne. Le mode hors gel constitue une mesure de sauvegarde du local 2.

Typiquement, si le taux de marche 15 observé est supérieur ou égal à la valeur critique 33 durant un nombre m de phase d'observation 31 consécutives, et si le taux de marche sur la phase d'observation en cours est égal à 100%, et si la température ambiante 3 est inférieure à la température de consigne 4 minimale correspondant au mode de fonctionnement hors gel, le dispositif passe en mode hors gel.

Cependant, si le taux de marche 15 observé est supérieur ou égal à la valeur critique 33 durant un nombre m de phase d'observation 31 consécutives, et si le taux de marche sur la phase d'observation en cours est égal à 100%, et si la température ambiante 3 est supérieure à la température définie par le mode hors gel, le taux de marche 15 est simplement limité à la valeur critique 33.

La fin de cette limitation du taux de marche 15 prend effet à la suite d'une augmentation de la température ambiante 3 durant le nombre de cycle 32 nécessaire à faire recommencer une phase d'observation 31 comme dans le mode de réalisation décrit ci-dessus. La température ambiante 3 remontant, une nouvelle phase d'observation 31 commence, avec la définition d'un nouveau taux de marche 15 et éventuellement une augmentation de la température de consigne 34 appliquée.

Un autre mode de réalisation préférentiel du procédé selon l'invention permet d'atteindre plus vite un taux de marche 15 non critique en présence d'une importante différence de température entre la température de consigne 34 appliquée et la température ambiante 3. Ce mode prévoit que, si le taux de marche 15 est égal à 100% durant tous les cycles de la phase d'observation 31, la diminution de la température de consigne 34 est de deux échelons 36 au lieu d'un seul.

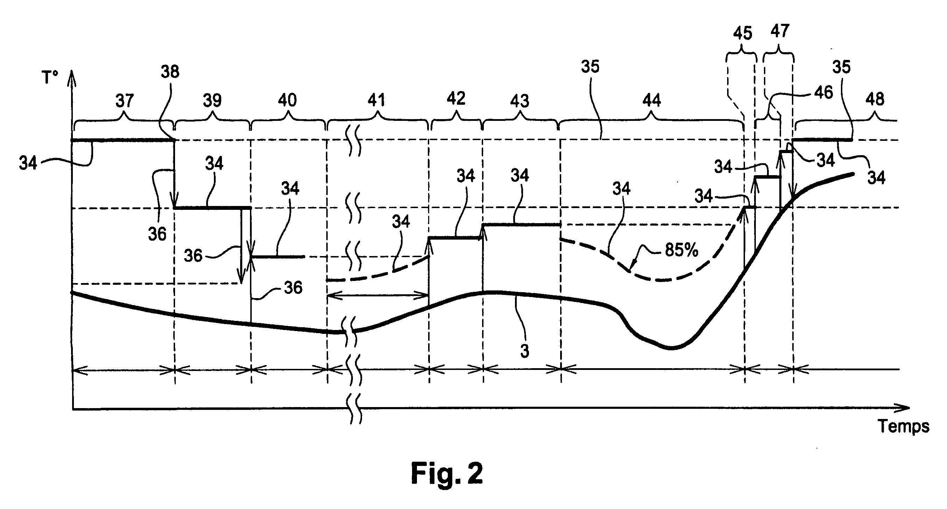

La figure 2 est une représentation graphique de la température ambiante et de la température de consigne en fonction du temps, durant une utilisation du procédé selon un exemple de réalisation de l'invention dans un dispositif de chauffage.

Dans cet exemple, un local 2 comportant une fenêtre 28 est chauffé par un dispositif de chauffage 1. Durant une première phase d'observation 37, la fenêtre 28 est grande ouverte. La température ambiante 3 baisse durant n cycles 32, alors que le taux de marche est de 100%, soit supérieur à une valeur critique 33 définie comme égale à 85%. Une étape de modification 38 fait diminuer la température de consigne 34 appliquée. La température de consigne 34 appliquée est supérieure de plus de deux échelons 36 à la température ambiante. La température de consigne 34 appliquée durant une phase d'observation 39 est donc la température de consigne de la phase d'observation 37 diminuée d'un échelon 36. Durant la phase d'observation 39, la température ambiante continue de baisser et le taux de marche est toujours de 100%. La température de consigne utilisée 34 est supérieure à la température ambiante 3 de moins de deux échelon 36. Durant la phase de modification, la température de consigne 34 appliquée pour une troisième phase d'observation 40 est donc égale à la température ambiante 3 additionnée d'un échelon. Durant la phase d'observation 40, le taux de marche 15 reste à 100% mais la température ambiante 3 n'augmente toujours pas durant les n cycles 32. Durant 3 phases d'observation 31 consécutives, le taux de marche 15 est supérieur à la valeur critique de 85%. De plus, le taux de marche 15 est égal à 100% durant la phase d'observation 40. Ici, le nombre m de phases d'observations 31 consécutives pour limiter le taux de marche 15 est égal à 3.

Durant une phase d'observation 41, le taux de marche est donc limité à 85%, car la température ambiante 3 est supérieure à une température définie par le mode hors gel du dispositif de chauffage 1. La fenêtre 28 se trouve maintenant en position entrouverte, l'arrivée d'air froid est alors limitée. La température ambiante 3 remonte alors durant z cycles 32 consécutifs, le nombre z étant ici égal à 5.. La phase d'observation 41 est donc arrêtée et une phase d'observation 42 commence. La température de consigne 34 appliquée lors de la phase d'observation 42 est définie comme étant égale à la température ambiante 3 augmentée d'un échelon 36. La température ambiante 3 augmente durant 5 cycles consécutifs durant la phase d'observation 42. La phase d'observation 42 est alors interrompue. La température de consigne 34 appliquée durant une phase d'observation 43 est définie comme égale à la température ambiante 3 augmentée d'un échelon 36. Durant la phase d'observation 43, la fenêtre 28 est à nouveau ouverte entièrement. La température ambiante 3 n'augmente donc pas durant les n cycles 32 de la phase d'observation 43. Le taux de marche 15 durant la phase d'observation 43 est de 100%. Les phases d'observation 41, 42 et 43 ayant un taux de marche supérieur ou égal à la valeur critique 33 de 85%, et le taux de marche 15 de la phase d'observation 43 étant de 100%, le taux de marche 15 durant une phase d'observation 44 est limité à 85%.

Durant cette phase d'observation 44, la fenêtre est refermée. L'arrivée d'air froid est alors interrompue. La température ambiante remonte alors durant cinq cycles consécutifs et une nouvelle phase d'observation 45 est initialisée. La température de consigne 34 définie pour cette phase d'observation 45 est égale à la température ambiante 3 augmentée d'un échelon 36 et le taux de marche 15 est compris entre 85% et 100%. La température ambiante 3 augmentant, la phase d'observation 45 ne dure que cinq cycles 32 avant d'être arrêtée, tout comme une phase d'observation 46 et une phase d'observation 47 pour lesquelles la température de consigne utilisée est égale à la température ambiante augmentée d'un échelon. Cependant, la température ambiante 3 est inférieure de moins d'un échelon 36 à la température de consigne définie par l'utilisateur à la fin de la phase d'observation 47. Une phase d'observation 48 a donc lieu avec une température de consigne 34 égale à la température de consigne 35 définie par l'utilisateur.

## Revendications

1. - Procédé de chauffage à l'aide d'un dispositif de chauffage comportant au moins un émetteur (5) de chaleur, un thermostat (6) et une sonde (14), le procédé comportant :
- une étape au cours de laquelle on alimente en énergie le dispositif de chauffage,
- une étape au cours de laquelle une température ambiante (3) est mesurée par la sonde,
- une étape au cours de laquelle une température de consigne (4) est définie,
- une étape de transmission, à l'émetteur de chaleur, d'instructions (25) de chauffage tenant compte de ces températures,
- une phase (31) d'observation, comportant n cycles (32) au cours de chacun desquels un taux de marche (15) de l'émetteur de chaleur est mémorisé dans une mémoire (10) de données, n étant un entier au moins égal à 2,
- une étape au cours de laquelle la température de consigne peut être modifiée en fonction des taux de marche mémorisés pendant la phase d'observation,
ledit procédé étant **caractérisé en ce que** :
- à la suite d'une phase (31) d'observation, la température (34) de consigne est diminuée si le taux de marche observé est supérieur ou égal à une valeur critique (33) durant un nombre y minimal de cycles de ladite phase d'observation, y étant un entier compris entre 1 et n,
- à la suite d'une phase (31) d'observation, la température (34) de consigne est augmentée **si les conditions suivantes sont remplies :**
- le taux de marche observé durant tous les cycles de ladite phase d'observation est inférieur à une valeur critique (33), **et**
- la température (34) de consigne est inférieure à la température de consigne (35) initiale, **et**
- la température ambiante a augmenté durant ladite phase d'observation.

2. - Procédé selon la revendication 1, **caractérisé en ce que** la température de consigne (34) modifiée ne peut dépasser **la** température de consigne (35) initiale définie par un utilisateur du dispositif de chauffage.

3. - Procédé selon l'une des revendications 1 à 2, **caractérisé en ce que**, si la température ambiante est inférieure d'au moins deux écarts-types ou échelons (36) à la température de consigne (34) appliquée durant la phase d'observation, alors la température de consigne est diminuée d'un échelon après ladite phase d'observation.

4. - Procédé selon l'une des revendications 1 à 3, **caractérisé en ce que**, si la température ambiante est inférieure de moins de deux écarts-types ou échelons (36) à la température de consigne (34) appliquée durant la phase d'observation, alors la température de consigne est rendue égale à la température ambiante augmentée d'un échelon après ladite phase d'observation.

5. - Procédé selon l'une des revendications 1 à 4, **caractérisé en ce que**, si la température ambiante n'a pas augmenté durant une phrase d'observation suivant une étape de modification de la température de consigne, et si le taux de marche (15) est supérieur à la valeur critique (33) durant ladite phase d'observation, alors le taux de marche est limité à ladite valeur critique après ladite phase d'observation.

6. - Procédé selon l'une des revendications 1 à 5, **caractérisé en ce que**, si la température ambiante augmente sur 5 cycles (32) consécutifs, alors la phase d'observation (31) en cours est arrêtée et la température de consigne est augmentée.

7. - Procédé selon l'une des revendications 1 à 6, **caractérisé en ce que**, si durant m phases d'observation consécutives, m étant un entier supérieur ou égal à 2, le taux de marche observé est supérieur ou égal à la valeur critique, et si le taux de marche observé durant la phase d'observation en cours est égal à 100%, et si la température ambiante est inférieure à la température de consigne définie pour un mode hors gel, alors le dispositif passe en mode hors gel.

8. - Procédé selon l'une des revendications 1 à 7, **caractérisé en ce que**, si durant un nombre m de phases d'observation consécutives, m étant un entier supérieur ou égal à 2, le taux de marche observé est supérieur ou égal à la valeur critique, et si le taux de marche observé pour la phase d'observation en cours est égal à 100%, et si la température ambiante est supérieure à la température de consigne définie pour le mode hors gel, alors
le taux de marche est limité à la valeur critique.

9. - Procédé selon l'une des revendications 1 à 8, **caractérisé en ce que** si le taux de marche est égal à 100% durant tous les cycles **de la** phase d'observation, la température de consigne est diminuée de deux **écarts-types ou** échelons (36) suite à cette phase d'observation.

10. - Dispositif de chauffage muni de moyens de mise en oeuvre d'un procédé selon l'une des revendications 1 à 9.

## Claims

1. - A heating method using a heating device comprising at least one heat emitter (5), a thermostat (6) and a probe (14), the method comprising:
- a step during which the heating device is powered,
- a step during which an ambient temperature (3) is measured by the probe,
- a step during which a set temperature (4) is defined,
- a transmission step transmitting heating instructions (25) to the heat emitter, taking into account these temperatures,
- an observation phase (31) comprising n cycles (32) during which a working rate (15) of the heat emitter is recorded in a data memory (10), n being an integer at least equal to 2,
- a step during which the set temperature can be modified according to the working rates recorded during the observation phase,
said method being **characterised in that**:
- after an observation phase (31), the set temperature (34) is reduced if the working rate observed is greater than or equal to a critical value (33) over a minimum number y of cycles of said observation phase, y being an integer between 1 and n,
- after an observation phase (31), the set temperature (34) is increased if the following conditions are met:
- the working rate observed during all of the cycles of said observation phase is less than a critical value (33), and
- the set temperature (34) is less than the initial set temperature (35), and
- the ambient temperature increased during said observation phase.

2. - A method according to claim 1, **characterised in that** the modified set temperature (34) cannot exceed the initial set temperature (35) defined by a user of the heating device.

3. - A method according to one of claims 1 to 2, **characterised in that**, if the ambient temperature is at least two standard deviations or steps (36) less than the set temperature (34) applied during the observation phase, the set temperature is therefore reduced by one step after said observation phase.

4. - A method according to one of claims 1 to 3, **characterised in that**, if the ambient temperature is less than two standard deviations or steps (36) less than the set temperature (34) applied during the observation phase, the set temperature is therefore made equal to the ambient temperature increased by one step after said observation phase.

5. - A method according to one of claims 1 to 4, **characterised in that**, if the ambient temperature did not increase during an observation phase after a step modifying the set temperature, and if the working rate (15) is greater than the critical value (33) during said observation phase, the working rate is therefore limited to said critical value after said observation phase.

6. - A method according to one of claims 1 to 5, **characterised in that**, if the ambient temperature increases over 5 consecutive cycles (32), the current observation phase (31) is therefore stopped and the set temperature is increased.

7. - A method according to one of claims 1 to 6, **characterised in that** if, during m consecutive observation phases, m being an integer greater than or equal to 2, the working rate observed is greater than or equal to the critical value, and if the working rate observed during the current observation phase is equal to 100%, and if the ambient temperature is less than the set temperature defined for a frost-prevention mode, the device therefore passes into frost-prevention mode.

8. - A method according to one of claims 1 to 7, **characterised in that** if, during a number m of consecutive observation phases, m being an integer greater than or equal to 2, the working rate observed is greater than or equal to the critical value, and if the working rate observed during the current observation phase is equal to 100%, and if the ambient temperature is greater than the set temperature defined for the frost-prevention mode, the working rate is therefore limited to the critical value.

9. - A method according to one of claims 1 to 8, **characterised in that** if the working rate is equal to 100% during all of the cycles of the observation phase, the set temperature is reduced by two standard deviations or steps (36) after this observation phase.

10. - A heating device equipped with means for implementing a method according to one of claims 1 to 9.

## Patentansprüche

1. Heizverfahren mithilfe eines Heizgerätes umfassend zumindest einen Wärmestrahler (5), einen Thermostaten (6) und eine Sonde (14), wobei das Verfahren folgendes umfasst:
- einen Schritt, im Laufe dessen man das Heizgerät mit Energie versorgt,
- einen Schritt, im Laufe dessen von der Sonde eine Umgebungstemperatur (3) gemessen wird,
- einen Schritt, im Laufe dessen eine Solltemperatur (4) definiert wird,
- einen Schritt zum Übertragen von Heizinstruktionen (25) an den Wärmestrahler unter Berücksichtigung dieser Temperaturen,
- eine Phase (31) der Beobachtung, umfassend n Zyklen (32), wobei in jedem der Zyklen in einem Datenspeicher (10) eine Betriebsquote (15) des Wärmestrahlers abgespeichert wird, und n eine Ganzzahl zumindest gleich 2 ist,
- einen Schritt, im Laufe dessen die Solltemperatur in Abhängigkeit von den in der Beobachtungsphase gespeicherten Betriebsquoten verändert werden kann,
wobei das besagte Verfahren **dadurch gekennzeichnet ist, dass**:
- die Solltemperatur (34) infolge einer Beobachtungsphase (31) verringert wird, wenn die beobachtete Betriebsquote während einer Mindestanzahl y an Zyklen der besagten Beobachtungsphase größer oder gleich einem kritischen Wert (33) ist, wobei y eine Ganzzahl zwischen 1 und n ist,
- die Solltemperatur (34) infolge einer Beobachtungsphase (31) erhöht wird, wenn **die folgenden Bedingungen erfüllt werden:**
- die beobachtete Betriebsquote in allen Zyklen der besagten Beobachtungsphase kleiner ist, als ein kritischer Wert (33), **und**
- die Solltemperatur (34) geringer ist, als die ursprüngliche Solltemperatur (35), **und**
- die Umgebungstemperatur während der besagten Beobachtungsphase angestiegen ist.

2. Verfahren nach Anspruch 1, **dadurch gekennzeichnet, dass** die geänderte Solltemperatur (34) die ursprüngliche Solltemperatur (35), die durch einen Benutzer des Heizgerätes definiert worden ist, nicht übersteigen kann.

3. Verfahren nach einem der Ansprüche 1 bis 2, **dadurch gekennzeichnet, dass**, wenn die Umgebungstemperatur um zumindest zwei Standardabweichungen oder Stufen (36) geringer ist, als die Solltemperatur (34), die während der Beobachtungsphase angewandt wurde, die Solltemperatur nach der besagten Beobachtungsphase um eine Stufe gesenkt wird.

4. Verfahren nach einem der Ansprüche 1 bis 3, **dadurch gekennzeichnet, dass**, wenn die Umgebungstemperatur um weniger als zwei Standardabweichungen oder Stufen (36) geringer ist, als die Solltemperatur (34), die während der Beobachtungsphase angewandt wurde, die Solltemperatur an die nach der besagten Beobachtungsphase um eine Stufe angehobene Umgebungstemperatur angeglichen wird.

5. Verfahren nach einem der Ansprüche 1 bis 4, **dadurch gekennzeichnet, dass**, wenn die Umgebungstemperatur während einer Beobachtungsphase nach einem Änderungsschritt der Solltemperatur nicht erhöht worden ist, und wenn die Betriebsquote (15) während der Beobachtungsphase über dem kritischen Wert (33) liegt, die Betriebsquote nach der besagten Beobachtungsphase auf den besagten kritischen Wert begrenzt wird.

6. Verfahren nach einem der Ansprüche 1 bis 5, **dadurch gekennzeichnet, dass**, wenn die Umgebungstemperatur innerhalb von 5 aufeinander folgenden Zyklen (32) ansteigt, die laufende Beobachtungsphase (31) unterbrochen, und die Solltemperatur erhöht wird.

7. Verfahren nach einem der Ansprüche 1 bis 6, **dadurch gekennzeichnet, dass**, wenn die beobachtete Betriebsquote innerhalb von m aufeinander folgenden Beobachtungsphasen, mit m als Ganzzahl größer oder gleich 2, größer oder gleich dem kritischen Wert ist, und wenn die beobachtete Betriebsquote während der laufenden Beobachtungsphase gleich 100% ist, und wenn die Umgebungstemperatur geringer ist, als die Solltemperatur, die für einen Frostschutzmodus definiert wurde, das Gerät in den Frostschutzmodus übergeht.

8. Verfahren nach einem der Ansprüche 1 bis 7, **dadurch gekennzeichnet, dass**, wenn die beobachtete Betriebsquote innerhalb von m aufeinander folgenden Beobachtungsphasen, mit m als Ganzzahl größer oder gleich 2, größer oder gleich dem kritischen Wert ist, und wenn die beobachtete Betriebsquote während der laufenden Beobachtungsphase gleich 100% ist, und wenn die Umgebungstemperatur höher ist, als die Solltemperatur, die für einen Frostschutzmodus definiert wurde, die Betriebsquote auf den kritischen Wert beschränkt wird.

9. Verfahren nach einem der Ansprüche 1 bis 8, **dadurch gekennzeichnet, dass** wenn die Betriebsquote während aller Zyklen der Beobachtungsphase gleich 100% ist, die Solltemperatur nach dieser Beobachtungsphase um zwei Standardabweichungen oder Stufen (36) abgesenkt wird.

10. Heizgerät, das mit Geräten zur Umsetzung eines Verfahrens nach einem der Ansprüche 1 bis 9 ausgestattet ist.
